# EUROPEAN PATENT APPLICATION

(11) **EP 1 233 533 A1**
(43) Date of publication of application: **21.08.2002**
(21) Application number: 01955680.2
(22) Date of filing: 10.08.2001
(51) Int. Cl.: H04B 1/707, H04M 11/00

(54) **WIRE COMMUNICATION DEVICE, WIRE COMMUNICATION APPARATUS, WIRE COMMUNICATION METHOD, AND WIRE COMMUNICATION SYSTEM**

(30) Priority: 10.08.2000 JP 2000243082
(71) Applicant: Neix, Inc., Sapporo-shi, Hokkaido 003-0012 (JP)
(72) Inventor: NISHIMURA, Yutaka, Neix, Inc., Sapporo-shi, Hokkaido 003-0012 (JP)
(74) Representative: HOFFMANN - EITLE
(86) International application number: JP0106936
(87) International publication number: WO02015426

(57) **Abstract**

The wire communications device 30 comprises a primary modulating portion 32, a PN code generating portion 34, a spread spectrum modulating portion 36, and a communications interface portion 38. The primary modulating portion 32 performs primary modulation of the transmission data to produces a primary modulated signal. The PN code generating portion 34 generates a PN code in synchronization with a synchronizing signal that has a predetermined period. The spread spectrum modulating portion 36 performs spread spectrum modulation of the primary modulated signal using the PN code, thereby producing a spread spectrum modulated signal. The communications interface portion 38 sends the synchronizing signal and spread spectrum modulated signal to the wire communications channel 3. Accordingly, the receiver can produce a spread spectrum code for reverse spread spectrum demodulation with respect to the synchronizing signal received from the wire communications channel 3. As a result, a wire communications device, wire communications apparatus, wire communications method and wire communications system can be provided to increase the transmission speed of data when spread spectrum communications systems are applied to wire communications channels.

## Description

### TECHNICAL FIELD

The present invention relates to a wire communications device, wire communications apparatus, wire communications system and wire communications method of performing spread spectrum communications via a wire communications channel.

### BACKGROUND ART

Attempts have been made to realize high-speed data communications with personal computers via communications lines having existing or newly installed metal cables that are shared with telephone lines. Such data communications systems include a communications system adjusting to the Home Phoneline Networking Alliance (Home PNA) standard, and an xDSL communications system, such as Asymmetric Digital Subscriber Lines (ADSL).

In the Home PNA system, household telephone lines are multiplexed in a frequency region so that the household telephone lines can be shared with a conventional telephone by voice to use existing telephone lines as a network having a data transmission capability of approximately 10 Mbps. Furthermore, ADSL refers to asymmetric digital subscriber lines, and is a technique for multiplexing high-speed data communications and voice communications that provides a bandwidth of several hundred kHz in telephone subscriber lines.

### DISCLOSURE OF THE INVENTION

However, when ADSL uses multi-conductor cables to send communications data, crosstalk may occur between the communications lines in the multi-conductor cable, and phasing may be caused by mutual frequency interference. Furthermore, in Home PNA communications, a carrier wave is burst-modulated by digital signals to be transmitted, and then is sent out on the signal line. As a result, communications trouble may also occur in Home PNA as in ADSL.

In order to avoid the communications trouble occurring in these communications systems, a spread spectrum system used in wireless communications may also be used in wire communications system because the spread spectrum system has advantages as follows: (1) Immunity to interfering noise is high; (2) There is small interference with other lines, especially narrow-band lines, because of the lower power density of spread spectrum signals; (3) Any selective party on the other end of the connection can be called up; and (4) The confidentiality of line communications is high.

The inventor thinks that the abovementioned advantages can be obtained if spread spectrum communications are also applied to wire communications. Although, in spread spectrum communications, PN codes are used for modulation in a transmitter and is used for demodulation in a receiver, a PN code in the receiver is generated asynchronously with the PN code in the transmitter. Accordingly, in order to demodulate the reception data, synchronization of the. two codes, i.e., synchronization acquisition, should be eliminated. The synchronization acquisition is accomplished by determining the auto-correlation of the PN code sequence and a signal received by the receiver. As a result, the synchronization acquisition is a time consuming procedure.

Meanwhile, the inventor thinks that it will be necessary to use spread spectrum communications in wire communications in the near future. However, in order to use current spread spectrum systems, synchronization acquisition is unavoidable. Furthermore, obtaining synchronization acquisition is required for each individual communication regardless of the amount of data transmitted in a single communication. Accordingly, shortening time required for synchronization acquisition is necessary in order to achieve high-speed data communications, or if possible, substantially eliminating time required for synchronization acquisition is necessary. Japanese Patent Application Laid-Open publication No.H09-162839 (hereafter referred to as "the literature") relates to wire communications and the spread spectrum system. This literature discloses the wire communications apparatus capable of maximizing the reception power by correcting the spread spectrum signal to a power density distribution reflecting the characteristics of a twisted-pair line. However, this literature does not teach wasted time for synchronization acquisition.

Accordingly, it is an object of the present invention to provide a wire communications device, wire communications apparatus, wire communications method and wire communications system which are capable of increasing the speed of data communications in spread spectrum systems having communications channels.

The wire communications device according to the present invention comprises a primary modulating portion, a code generating portion, a spread spectrum modulating portion and a communications interface portion. The primary modulating portion performs primary modulation of data to be transmitted to produce a primary modulated signal. The code generating portion generates a spread spectrum code in synchronization with a synchronizing signal having a predetermined time period. The spread spectrum modulating portion performs spread spectrum modulation of the primary modulated signal by the spread spectrum code to produce a spread spectrum modulated signal. The communications interface can provide the wire communications channel with the synchronizing signal, and provide the wire communications channel with the spread spectrum-modulated signal. In this wire communications device, PN codes are preferable to the spread spectrum code, but the spread spectrum code is not limited thereto.

In the wire communications device, the synchronizing signal can be provided to the wire communications channel in addition to the spread spectrum modulated signal modulated using a spread spectrum code generated in synchronization with the synchronizing signal. Accordingly, a spread spectrum code for reverse spread spectrum demodulation can be generated in response to the synchronizing signal received from the wire communications channel.

The wire communications device according to the present invention may further comprise a reverse spread spectrum demodulating portion and a primary demodulating portion in addition to the features of the abovementioned wire communications device. The reverse spread spectrum demodulating portion performs, by a spread spectrum code, reverse spread spectrum demodulation of a signal received from the wire communications channel, thereby producing a reverse spread spectrum signal. The primary demodulating portion performs primary demodulation of the reverse spread spectrum signal to produce the original data.

The wire communications device may further comprise means for generating a reference signal, and filtering means, connected to the generating means, for filtering the reference signal to produce a synchronizing signal therefrom.

In the wire communications device, the filtering means is provided to pass a frequency component signal having the fundamental period of the reference signal.

In the wire communications device, the device may be provided such that the synchronizing signal is substantially expressed by either a single sine wave or a single cosine wave.

The wire communications device may further comprise pulse generating means, connected to the code generating portion, for generating pulse signals at each reference period.

The wire communications device may further comprise pulse generating means, provided between the filtering means and code generating portion, for producing pulse signals at each reference period.

In the wire communications device, the primary modulating portion may be connected to the pulse generating means, and may operate to receive the transmission signal in synchronization with the pulse signal from the pulse generating means.

In the wire communications device, the communications interface portion may be connected to the wire communications channel, and may include means for transmitting a synchronizing signal regardless of the presence or absence of spread spectrum modulated signals.

In the wire communications device, the communications interface portion may be connected to the wire communications channel, and may further include extraction means for extracting a synchronizing signal component from a signal received from the wire communications channel.

In the wire communications device, the communications interface portion may include extraction means, connected to the wire communications channel, for extracting a synchronizing signal component from a signal received from the wire communications channel. The communications interface portion may further comprise pulse generating means, connected to the extraction means, for producing a pulse signals at each fundamental period of a signal from the extraction means.

The wire communications device according to the present invention comprises a code generating portion, a reverse spread spectrum demodulating portion, and a primary demodulating portion. The code generating portion generates a spread spectrum code in synchronization with a synchronizing signal having a predetermined period. The reverse spread spectrum demodulating portion performs reverse spread spectrum demodulation of a signal from the wire communications channel by the spread spectrum code, thereby producing a reverse spread spectrum signal. The primary demodulating portion performs primary demodulation of the reverse spread spectrum signal, to produce the original data.

These wire communications devices above may perform the reverse spread spectrum demodulation of a signal received from the wire communications channel by use of a spread spectrum code generated in synchronization with the synchronizing signal. As a result, the reception data is obtained by performing reverse spread spectrum demodulation of a signal received from the wire communications channel, and then perform primary demodulation of this reverse spread spectrum demodulated signal.

In the wire communications device according to the present invention, the synchronizing signal can be produced by the signal generating portion or the signal reproducing portion capable of generating this synchronizing signal. The signal reproducing portion reproduces the synchronizing signal from a signal which is provided from the wire communications channel, and which includes a signal component having a predetermined time period.

In the wire communications device according to the present invention, it is preferable that the frequency spectrum of the synchronizing signal is narrower than that of the spread spectrum modulated signal. This reduces the effects of noise to the synchronization timing determined from the synchronizing signal.

The wire communications apparatus according to another aspect of the present invention comprises a plurality of wire communications devices, and a signal generating portion capable of generating a synchronizing signal having a predetermined period. In this wire communications apparatus, each wire communications device has a primary modulating portion, a code generating portion, a spread spectrum modulation portion, and a communications interface portion. Each wire communications device may further comprise a reverse spread spectrum demodulating portion and a primary demodulating portion. The respective portions in the wire communications devices, i.e., the primary modulating portion, code generating portion, spread spectrum modulating portion, communications interface portion, reverse-spread spectrum demodulating portion, and primary demodulating portion, may be the corresponding portions in wire communications devices that will be described below as well as the wire communications device described above.

In the wire communications apparatus, the signal generating portion may further comprise means for generating a reference signal, and filtering means, connected to the means, for filtering the reference signal to generate a synchronizing signal therefrom.

Still another aspect of the present invention is a wire communications apparatus. This wire communications apparatus comprises a plurality of wire communications devices, and a plurality of wire communications lines, each of which has a first end and a second end. The first end of each wire communications line is connected to each wire communications device, and the second end of each wire communications line is connected to each wire communications device contained in the wire communications apparatus.

In the wire communications system, a part of the plurality of wire communications lines may be provided to form communications cables.

The wire communications method of still another aspect of the present invention allows spread spectrum communications between a transmitter and a receiver connected to the transmitter via a wire communications channel.

This method comprises the following steps: (a) performing primary modulation of a transmission data to produce a primary modulated signal; (b) providing the wire communications channel with a synchronizing signal having a predetermined period; (c) performing spread spectrum modulation of the primary modulated signal by a spread spectrum code synchronized with the synchronizing signal to produce a spread spectrum modulated signal; and (d) providing the wire communications channel with the spread spectrum modulated signal.

In this method, the synchronizing signal in addition to the spread spectrum modulated signal are provided to the wire communications channel. The synchronizing signal can be utilized as a timing signal for producing a spread spectrum code for performing reverse spread spectrum demodulation of the spread spectrum modulated signal. In addition, this wire communications method may also comprise the following steps (e), (f) and (g).

The wire communications method comprises the following steps: (e) reproducing a synchronizing signal from a signal including a signal component having the predetermined time period, said signal being received from the wire communications channel; (f) performing, by a spread spectrum code generated in synchronization with the synchronizing signal, reverse spread spectrum modulation of the signal received from the wire communications channel to produce a reverse spread spectrum demodulated signal; and (g) performing primary demodulation of the reverse spread spectrum demodulated signal to produce a reception data.

In this method, the synchronizing signal is reproduced from the signal received from the wire communications channel. A spread spectrum code for reverse spread spectrum demodulation is produced based on the synchronizing signal. As a result, the reception data is produced by performing reverse spread spectrum demodulation of the signal received from the wire communications channel and then performing primary demodulation of the demodulated signal.

### BRIEF DESCRIPTION OF THE DRAWINGS

Fig. 1 is a diagram showing, as an example, a communications network to which the wire communications device of the present embodiment can be applied;
Fig. 2 is a block diagram showing one example of a wire communications device which can be applied to the communications network shown in Fig. 1;
Fig. 3 is a block diagram showing another example of a wire communications device which can be applied to the communications network shown in Fig. 1;
Fig. 4 is a frequency spectrum diagram of the multiplexed signal that is sent to the wire communications channel;
Fig. 5 is a frequency spectrum diagram of the multiplexed signal on the wire communications channel;
Figs. 6A and 6B are waveform diagrams which show the principal signal waveforms in the wire communications device;
Figs. 7A and 7B are waveform diagrams showing the signal waveforms in the wire communications device;
Fig. 8 is a block diagram of the wire communications system of the present embodiment; and
Fig. 9 is a block diagram of a wire communications device that can be applied to the communications network shown in Fig. 8.

### BEST MODE FOR CARRYING OUT THE INVENTION

The teaching of the present invention can be easily understood from the following detailed description with reference to the accompanying drawings. Preferred embodiments of the wire communications device, wire communications apparatus and wire communications method of the present invention will be described in detail along with the drawings. The same parts are labeled with the same reference symbols, if possible.

### (First Embodiment)

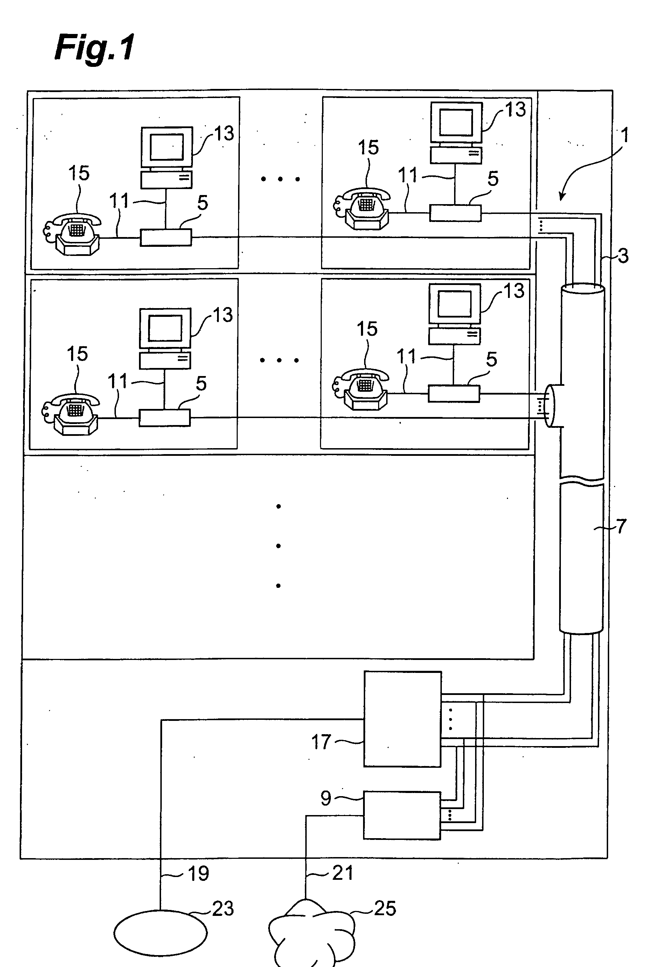

Fig. 1 illustrates as an example a communications network to which the wire communications device of the present embodiment can be applied. The communications network 1 shown in Fig. 1 can be used in facilities, such as collective housing and hotels, where numerous communications terminal units are equipped. The communications network 1 comprises terminal units 5, a communications cable 7, and a base station 9. The base station 9 is connected to the individual terminal units 5 via a telephone line 3 contained in a communications cable 7, such as a multi-conductor cable. The telephone line 3, for example, has a pair of wire lines. Furthermore, the base station 9 is connected to a high-speed communications network 23, such as the internet, via a communications cable 21. Personal computers 13 and telephones 15 are connected to the terminal units via a home telephone line 11. Furthermore, the communications network 1 is also connected to a telephone exchange 17, such as a PBX. The telephone exchange 17 is connected, via a communication cable 19, to a telephone network 23, such as a public switched telephone network (PSTN).

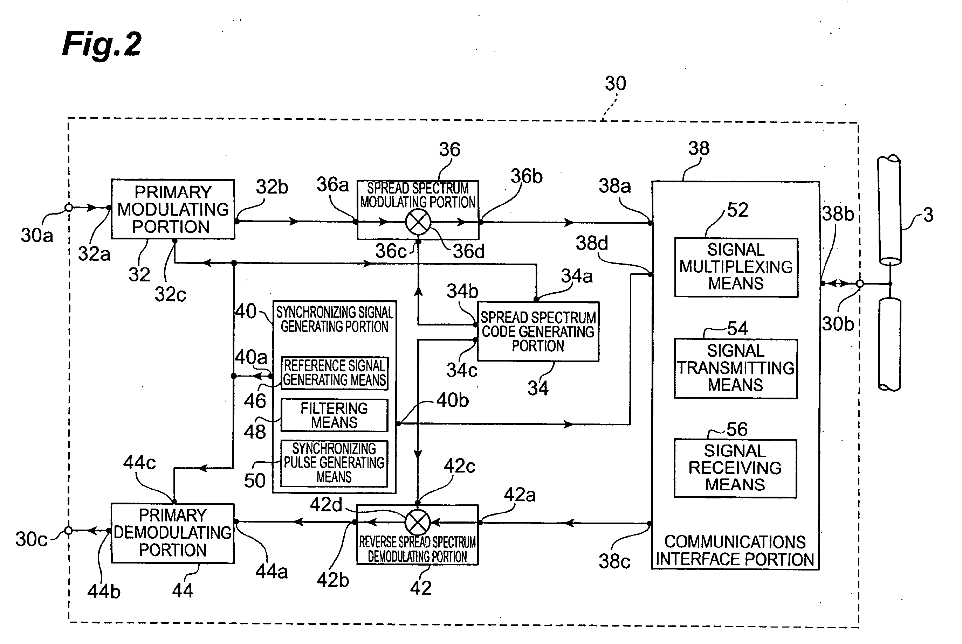

Fig. 2 shows a block diagram of a wire communications device 30 that can be used in the communications network shown in Fig. 1. The wire communications device 30 has a configuration that can be used in the base station.

Referring to Fig. 2, the wire communications device 30 sends out a transmission signal, which is produced by performing spread spectrum of transmission data received at a data input terminal 30a, via a signal input/output terminal 30b, and sends out, via the signal input/output terminal 30b, a synchronizing signal used to generate a spread spectrum code. Furthermore, the wire communications device 30 provides a data output terminal 30c with reception data produced by performing reverse spread spectrum of a signal received at the signal input/output terminal 30b. There is no need for synchronization acquisition in this spread spectrum communications by use of the wire communications device 30 because the wire communications device 30 uses a spread spectrum code generated in response to the synchronizing signal in this reverse spread spectrum operation.

For realizing this operation, the wire communications device 30 comprises a primary modulating portion 32, a spread spectrum code generating portion 34, a spread spectrum modulating portion 36, a communications interface portion 38, a synchronizing signal generating portion 40, a reverse spread spectrum demodulating portion 42, and a primary demodulating portion 44.

The primary modulating portion 32 receives transmission data from the data input terminal 30a at an input 32a. After performing primary modulation of this transmission data, the primary modulating portion 32 provides a primary modulated signal to an output 32b. Analog modulation manners, such as AM modulation or FM modulation, and digital modulation manners, such as PSK modulation or FSK modulation, may be used for this modulation. The following manners, such as bi-phase code transformation, CMI transformation, double-current RZ transformation, bipolar transformation, AMI (di-code) transformation and NRZI transformation may be also used for this modulation. The primary modulating portion 32 may receive a synchronizing signal, but the primary modulating portion is not limited thereto. The synchronizing signal can be used in primary modulating portion 32 to determine the timing of the data transmission or data serial transfer.

The spread spectrum code generating portion 34 has a synchronizing signal input 34a and receives a synchronizing signal having a predetermined period thereat. The spread spectrum code generating portion 34 provides outputs 34b and 34c with a spread spectrum code produced in synchronization with the synchronizing signal. A preferred example of the spread spectrum code is a PN code. Besides this code, other codes utilizable in spread spectrum communications may be used as this spread spectrum code as well.

The spread spectrum modulating portion 36 receives the primary modulated signal from the primary modulating portion 32 at an input 36a, and receives the spread spectrum code from the spread spectrum code generating portion 34 at an input 36c. The spread spectrum modulating portion 36 performs spread spectrum modulation of the primary modulated signal by multiplying the primary modulated signal by a spread spectrum code in a multiplier portion 36d. The spread spectrum modulated signal is provided to an output 36b, and is sent to the communications interface portion 38.

The synchronizing signal generating portion 40 generates a synchronizing signal which is provided to the spread spectrum code generating portion 34. Accordingly, the synchronizing signal generating portion 40 comprises, for example, reference signal generating means 46, filtering means 48 and synchronizing pulse generating means 50. The reference signal generating means 46 acts to generate a reference signal having a fundamental period to produce the synchronizing signal. For example, a quartz oscillator circuit can be used to generate a periodic signal in the reference signal generating means 46. The frequency of this period may be several MHz, for example, but the period is not limited thereto. The filtering means 48 acts to filter the reference signal produced by the reference signal generating means 46, thereby producing a reference period signal that contains mainly a frequency component corresponding to the fundamental period. The synchronizing pulse generating means 50 receives the reference period signal and then produce pulses at each reference period. In is preferable that the pulses from the output 40a is provided to the primary modulating portion 32, spread spectrum code generating portion 34 and primary demodulating portion 44. The reference period signal from the output 40b is provided to the communications interface portion 38 and is used as a synchronizing signal.

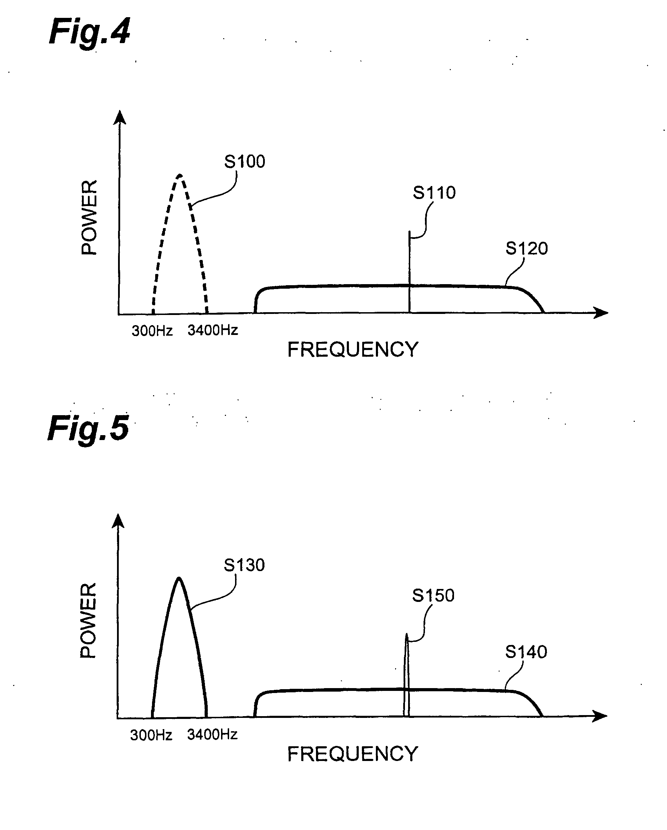

In regard to transmission operation, the communications interface portion 38 has an input 38a which receives the spread spectrum modulated signal from the spread spectrum modulating portion 36, and an input 38d which receives the synchronizing signal from the synchronizing signal generating portion 40. These signals are provided to an input/output 38b after being processed in the communications interface portion 38. To realize this process, the communications interface portion 38 has signal multiplexing means 52 and signal transmitting means 54. The signal multiplexing means 52 receives the synchronizing signal and the spread spectrum modulated signal, and acts to produce a multiplexed signal by multiplexing these signals in a frequency region. The signal transmitting means 54 amplifies this multiplexed signal, and send the amplified signal to the output 38b. The signal transmitting means 54 acts to send the spread spectrum modulated signal and the synchronizing signal to the telephone lines 3, and to send the synchronizing signal to the telephone lines 3 even in cases where no spread spectrum modulated signal is generated. Fig. 4 shows the frequency spectrum of the multiplexed signal. In Fig. 4, the synchronizing signal component is designated by S110, and the spread spectrum modulated signal component is designated by S120. For reference purposes, Fig. 4 also shows the frequency spectrum of a telephone voice signal, which has a spectral component of 300 Hz to 3.4 kHz indicated by the broken line S100.

In regard to reception operation, the communications interface portion 38 receives the reception signal at the input/output 38b, processes this signal, and then provides the processed signal to the output 38c. To realize this operation, the communications interface portion 38 has signal receiving means 56. Fig. 5 shows the frequency spectrum of the multiplexed signal on the telephone lines 3. In Fig. 5, the frequency spectrum of a telephone voice signal is designated by S130, the spread spectrum modulated signal component is designated by S140, and the synchronizing signal component is designated by S150. The signal receiving means 56 amplifies a signal from the telephone lines 3, and provides the amplified signal to the output 38c.

The reverse spread spectrum demodulating portion 42 receives a signal from the communications interface portion 38 at the input 42a, and the spread spectrum code from the spread spectrum code generating portion 34a at the input 42c. The reverse spread spectrum demodulating portion 42 performs reverse spread spectrum demodulation of the reception signal by multiplying the reception signal by the spread spectrum code in a multiplier portion 42d. The reverse spread spectrum demodulated signal is provided to the output 42b. Several signal components of the types shown in Fig. 5 are on the telephone lines 3. Although these signal components enter the reverse spread spectrum demodulating portion 42, the reverse spread spectrum demodulating portion 42 demodulates the only signal(s) that are synchronized with a specified spread spectrum code. Accordingly, the reverse spread spectrum demodulating portion 42 provides the output 42b with the only signal components that is correlated with the spread spectrum code. Consequently, in the present embodiment, a wire communications device will be described which does not separate the spread spectrum modulated signal component S150 from other signal components, but the present invention is not limited thereto.

The primary demodulating portion 44 receives the reverse spread spectrum signal at the input 44a. The primary demodulating portion 44 performs primary demodulation of the thus received reverse spread spectrum signal, thereby producing the received data. The primary demodulation manner is determined in accordance with the modulation manner used for primary modulation. The reception data is provided to the output 44b, which is connected to the data output terminal 30c. The primary demodulating portion 44 may also receive a synchronizing signal at the input 44c, but the primary demodulating portion 44 is not limited thereto. This synchronizing signal can be utilized to determine the timing of data reception or data serial transfer.

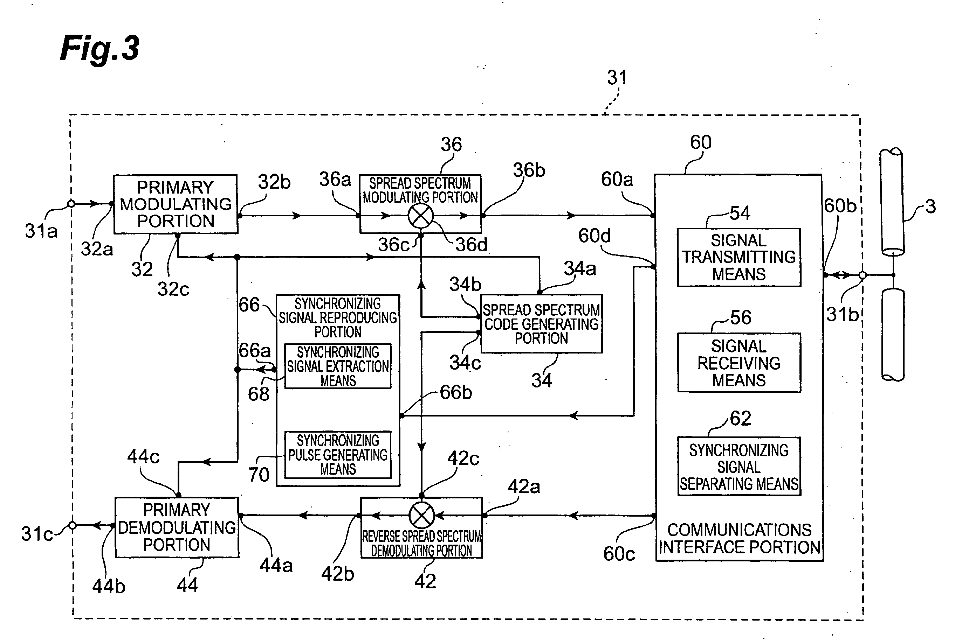

Fig. 3 shows a block diagram of a wire communications device 31 which can be applied to the communications network 1 shown in Fig. 1. The wire communications device 31 has a configuration that can be applied to terminal units that are connected to the base station via wire communications channels.

Referring to Fig. 3, the wire communications device 31 provides a signal input/output terminal 31b with a transmission signal produced by performing spread spectrum of transmission data received at a data input terminal 31a. In this case, the spread spectrum code is produced on the basis of a synchronizing signal provided from the base station via the signal input/output terminal 31b. The wire communications device 31 also provides a data output terminal 31c with reception data.produced by performing reverse spread spectrum demodulation of the reception signal received at the signal input/output terminal 31b. This spectrum reverse spread spectrum demodulation uses a code signal generated on the basis of a synchronizing signal from the base station. Accordingly, the wire communications device 31 does not need the synchronization acquisition.

Consequently, the wire communications device 31 includes a communications interface portion 60 and synchronizing signal reproducing portion 64 instead of the communications interface portion 38 and synchronizing signal generating portion 40 in the wire communications device 30. As constituent portions other than these portions, the wire communications device 31 may comprise a primary modulating portion 32, spread spectrum code generating portion 34, spread spectrum modulating portion 36, reverse-spread spectrum demodulating portion 42 and primary demodulating portion 44, which the wire communications device 30 has. But, the wire communications device 31 is not limited to this configuration.

Subsequently, the communications interface portion 60 and synchronizing signal reproducing portion 66 will be described in detail.

In the case of transmission operation, the communications interface portion 60 receives the spread spectrum modulated signal from the spread spectrum modulating portion 36 at an input 60a. After being processed in the communications interface portion 60, the processed signal is provided to an input/output 60b. Accordingly, the communications interface portion 60 has signal transmitting means 54 for amplifying the signal received at the input 50a, and for providing the amplified signal to the output 60b.

In the case of reception operation, the communications interface portion 60 processes the signal received at the input/output 60b to provide the output 60c with a spread spectrum modulated signal component and to provide the output 60d with a synchronizing signal component. In order to provide a synchronizing signal to the output 60d, the communications interface portion 60 has synchronizing signal extracting means 62 for separating the synchronizing signal component from signals on the wire communications channel. In Fig. 5, this synchronizing signal component is designated by S150. The synchronizing signal extracting means 62 acts as a filter to extract the synchronizing signal component S150 from signals on the telephone lines 3.

The synchronizing signal reproducing portion 66 receives the extracted signal from the communications interface portion 60 at an input 66a, and reproduces a synchronizing signal from the extracted signal. The synchronizing signal reproducing portion 66 comprises, for example, synchronizing signal extraction means 68 and synchronizing pulse generating means 70. The synchronizing signal extraction means 68 acts to receive a signal from the communications interface portion 60 and then to generate a reference period signal including a reference period for producing the synchronizing signal. Accordingly, the synchronizing signal extraction means 68 may comprise filtering means for filtering the extracted signal to produce a reference period signal which mainly includes a frequency component corresponding to the reference period. The synchronizing pulse generating means 70 receives the reference period signal, and produces pulses at each reference period. As in the wire communications device 30, these pulses may be provided to the primary modulating portion 32, spread spectrum code generating portion 34 and primary demodulating portion 44 from the output 66a.

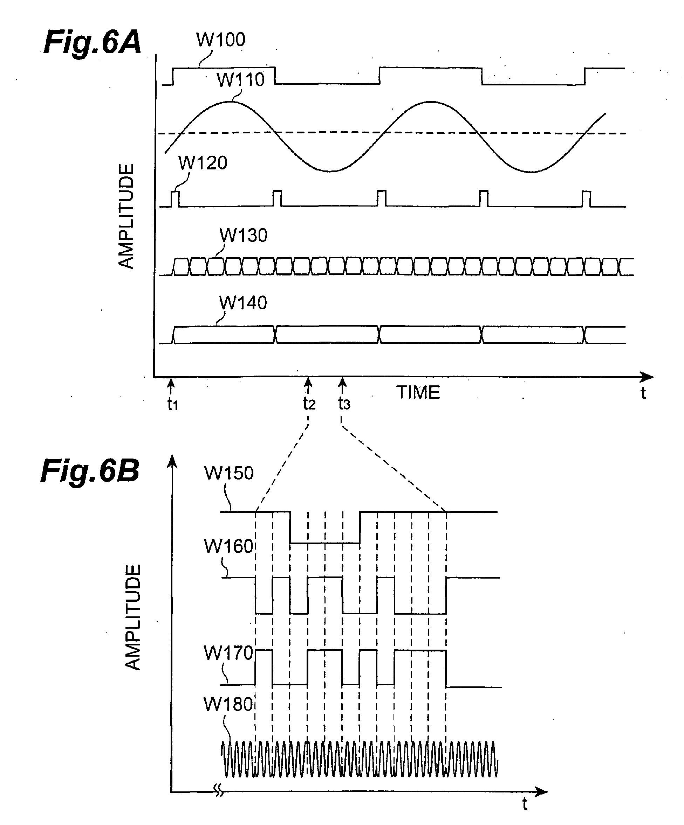

Next, the operation of data transmission in the wire communications device 30 will be described with reference to Figs. 6A and 6B. The waveform W100 indicates the signal that is generated by the reference signal generating means 46 of the synchronizing signal generating portion 40. This signal (waveform W100) is filtered by the filtering means 48, and is thus converted into a signal indicated by the waveform W110. The synchronizing pulse generating means 50 performs waveform shaping of this signal (waveform W110) to convert the shaped signal into the signal indicated by the waveform W120. This signal (waveform W120) is provided to the primary modulating portion 32 and spread spectrum code generating portion 34.

At time t1, the primary modulating portion 32 initiates its primary modulation in synchronization . with the signal (waveform W120). As a result, the primary modulating portion 32 produces a primary modulated signal indicated by the waveform W140 beginning at time t1.

At time t1, the spread spectrum code generating portion 34 starts the generation of a spread spectrum code in synchronization with the signal (waveform W120). As a result, the spread spectrum code generating portion 34 produces a spread spectrum code sequence indicated by the waveform W130 beginning at time t1.

These two signals (waveforms W130 and W140) are provided to the spread spectrum modulating portion 36. As a result of performing spread spectrum modulation of the primary modulated signal (waveform W140), the spread spectrum modulating portion 36 produces a spread spectrum modulated signal (waveform W180).

The spread spectrum modulated signal (waveform W180) is provided to the communications interface portion 38. The spread spectrum modulated signal is multiplexed with the synchronizing signal (e.g., waveform W110) that is to be sent out to the wire communications channel, and then the multiplexing signal is sent out to the wire communications channel (telephone lines 3 in Fig. 2).

Fig. 6B shows the waveform W150 of the transmission data signal, the waveform W160 of the spread spectrum code signal and the waveform W180 of the spread spectrum modulated signal represented in the range of times t2 to t3. As has already been described, the spread spectrum modulating portion 36 multiplies the primary modulated signal (waveform W140) by the spread spectrum code (waveform W130). Since the primary modulated signal has already been modulated, the graphic representation of the spread spectrum modulated signal is a complex waveform. Accordingly, the graphic representation of the primary modulated signal (waveform W140), spread spectrum code signal (waveform W130) and spread spectrum modulated signal (waveform W180) does not always facilitate to understand the relationship of these signals. Accordingly, Fig. 6B shows the result (waveform W170) of the multiplication of the spread spectrum modulated signal (waveform W130) by a waveform obtained by removing the primary modulated component from the primary modulated signal, i.e., the transmission data (waveform W150). Therefore, the signal indicated by the waveform W170 is not a real signal which does not appear in the spread spectrum modulating portion 36. However, the comparison between the waveform W180 of the spread spectrum modulated signal and the waveform W170 reveals that the spread spectrum modulation of the primary modulated signal using the spread spectrum code (waveform W160) corresponds to the multiplication of these signals.

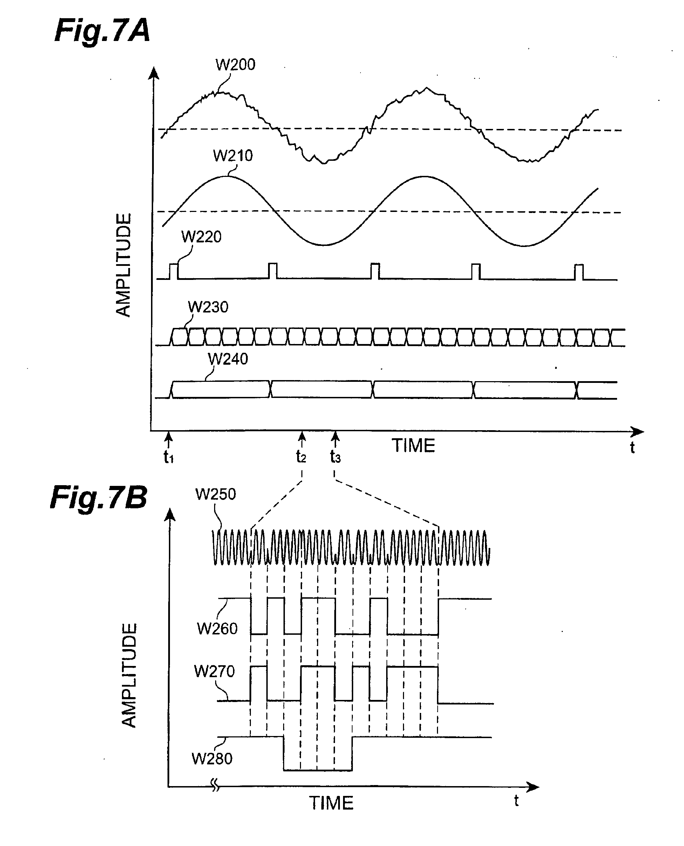

Next, the operation of data reception in the wire communications device 31 will be described with reference to Figs. 7A and 7B. The waveform W200 indicates the synchronizing signal component that the communications interface portion 60 receives. This signal component (waveform W200) is provided to the synchronizing signal reproducing portion 66 at the output 66d. In the synchronizing signal reproducing portion 66, the synchronizing signal extraction means 68 produces, from the signal component (waveform W200), a signal (waveform W210) mainly containing a frequency component corresponding to the reference period. The frequency spectrum of the synchronizing signal is so narrow that the signal component indicated by the waveform W210 can easily be extracted from the waveform W200. The synchronizing pulse generating means 70 performs the wave-shaping of the waveform W210 to convert thus shaped signal into a signal indicated by the waveform W220. This signal (waveform W220) is provided to the primary demodulating portion 44 and spread spectrum code generating portion 34.

The spread spectrum code generating portion 34 initiates the generation of a spread spectrum code at time t1 in synchronization with the signal indicated by the waveform W220. As a result, the spread spectrum code generating portion 34 produces the sequence of a spread spectrum code indicated by the waveform W230 beginning at time t1.

Two signals (waveforms W230 and W250) are provided to the reverse spread spectrum demodulating portion 42. The reverse spread spectrum demodulating portion 42 provides the primary demodulating portion 44 with the result of the multiplication of these two signals (waveform 240).

The primary demodulating portion 32 initiates to perform primary demodulation at time t1 in synchronization with the signal indicated by the waveform W220. As a result, the primary demodulating portion 44 produces the reception data indicated by the waveform W280 beginning at time t1.

Fig. 7B shows the waveform W250 of the spread spectrum modulated signal component (contained in the signal), the waveform W270 of the reverse spread spectrum code signal and the waveform W280 of the reception data in the range of time t2 to t3. In order to facilitate the understanding of the multiplication operation that is performed in the reverse spread spectrum demodulating portion 42, Fig. 7B shows the result of the multiplication by the same simplification as that in Fig. 6B, i.e., the received data (waveform W280), of the spread spectrum code signal (waveform W270) by the signal (waveform W260) obtained by removing the primary modulated component from the spread spectrum modulated signal component. When the waveforms W250 and W260 are compared with each other, it may be seen that the reverse spread spectrum demodulation of the reception signal (waveform W250) using the spread spectrum code signals (waveform W270) corresponds to the multiplication of these signals.

### (Second Embodiment)

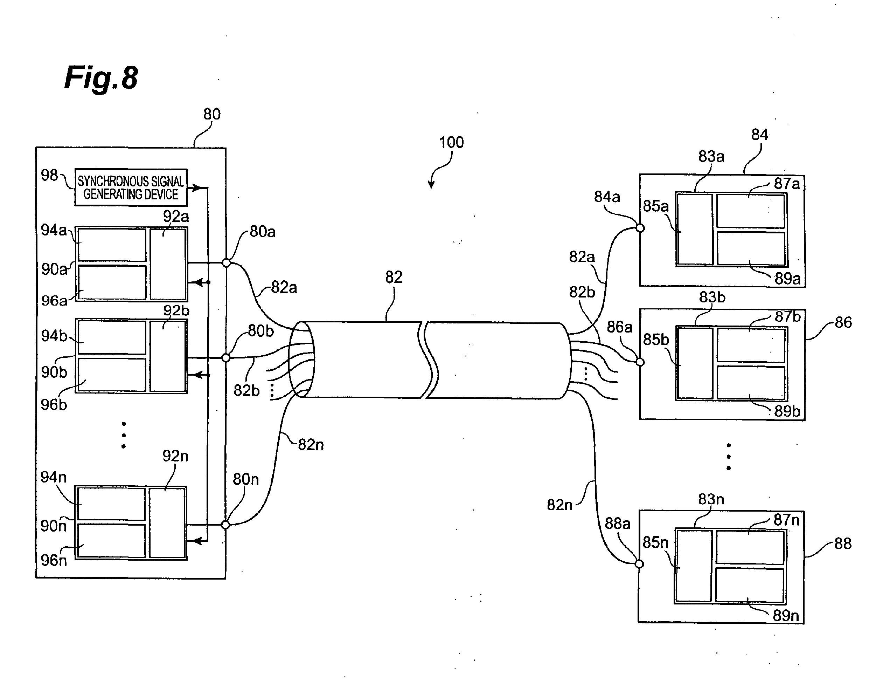

A wire communications system 100 is shown in Fig. 8. This wire communications system 100 comprises a base station 80, one or more terminal units 84, 86 and 88, and a wire communications channel 82 used to connect these stations. The base station 80 comprises a plurality of wire communications devices 90a, 90b and 90n, and a synchronizing signal generating device 98. Each of the terminal units 84, 86 and 88 has a wire communications device (e.g., reference numeral 31 in Fig. 3). The wire communications devices 90a, 90b and 90n in the base station 80 are connected to the terminal units 84, 86 and 88 via individual metal paired wires 82a, 82b and 82n of the wire communications channel, respectively. Bi-directional communications are realized between the terminal unit 80 and the base stations 84, 86 and 88. For example, the wire communications channel 82 may be made of multi-conductor cable.

The wire communications device 90a has a transmitting and receiving unit 92a, a transmission control unit 94a, and a reception processing unit 96a. As in the case of the wire communications device 90a, each of the wire communications devices 90b and 90n has transmitting and receiving units 92b and 92n, transmission control units 94b and 94n, and reception processing units 96b and 96n, respectively. The wire communications device 90a is described as an example, the transmission control unit 92a processes the transmission data that is to be provided to the transmitting and receiving unit 92a, and the reception processing unit 96a processes the received data that the transmitting and receiving unit 92a provides.

The wire communications device 83a has a transmitting and receiving unit 85a, a transmission control unit 87a, and a reception processing unit 89a. As in the case of the wire communications device 83a, each of the wire communications devices 83b and 83n has transmitting and receiving units 85b and 85n, transmission control units 87b and 87n, and reception processing units 89b and 89n, respectively.

Each of the wire communications devices 90a, 90b and 90n has a spread spectrum code generating portion for producing a spread spectrum code different from the others. Each of the wire communications devices 83a, 83b and 83n has a spread spectrum code generating portion for producing a spread spectrum code different from the others. The wire communications devices 90a, 90b and 90n are connected via the wire communications channel 82 to the wire communications devices 83a, 83b and 83n of the terminal units, respectively, and the spread spectrum codes of the wire communications devices 90a, 90b and 90n are equivalent to those of the wire communications devices 83a, 83b and 83n, respectively.

In this communications network system, the individual wire communications devices produce spread spectrum modulated signals using respectively different PN codes. Accordingly, crosstalk from adjacent metal paired wires causes noise having signal components of spread spectrum modulation performed with different PN codes. A spread spectrum modulated signal is demodulated only by a specified wire communications device that has the same PN code as that for modulation. Accordingly, the induced noise does not appear in the demodulated signals of wire communications devices that have different spread spectrum codes.

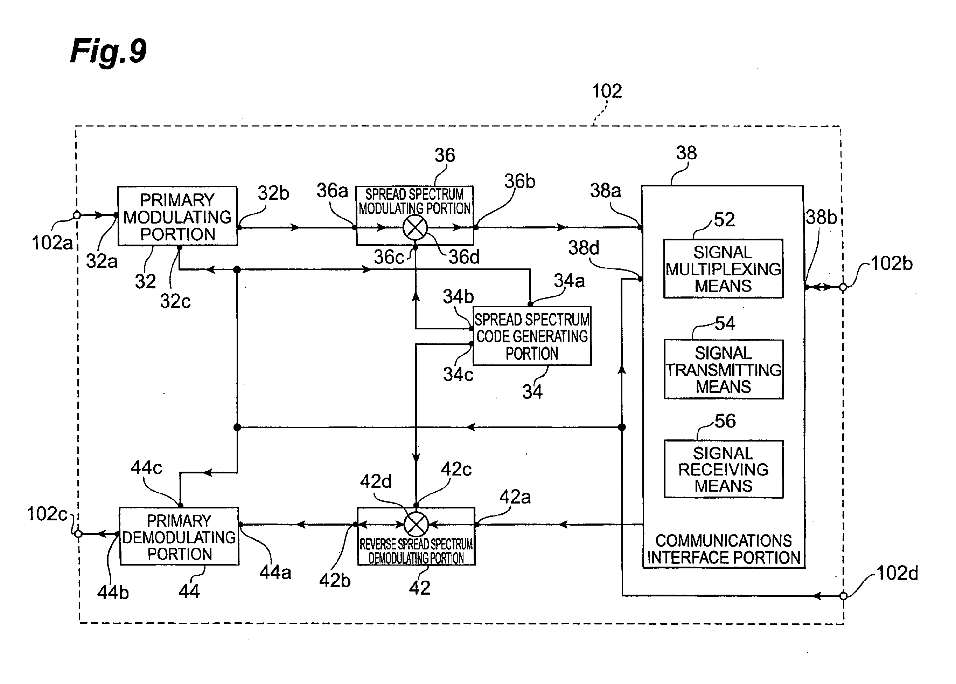

The transmitting and receiving unit 92a of the wire communications device 90a may comprise the configuration as shown in Fig. 9. As clearly seen from Fig. 9, the wire communications device 90a is similar to the wire communications devices shown in Figs. 2 and 3. The main portion 102 of the transmitting and receiving unit 92a receives transmission data at an input 102a, and provides an input/output 102b with a spread spectrum modulated signal. Furthermore, the main portion 102 receives a signal from the wire communications channel 82 at the input/output 102b, processes the received signal, and provides an output 102c with the processed data. Accordingly, the main portion 102 comprises a primary modulating portion 32, a spread spectrum modulating portion 34, a spread spectrum code generating portion 36, a communications interface portion 38, a reverse spread spectrum demodulating portion 42, and a primary demodulating portion 44. The main portion 102 does not include a synchronizing signal generating portion 40, and receives, at the input 102d, a synchronizing signal from the synchronizing signal generating device 98. For providing the synchronizing signal, the base station 80 comprises a common synchronizing signal generating device 98 shared by the wire communications devices 90a, 90b and 90n. The synchronizing signal generating device 98 may have a configuration that is identical to or similar to that of the synchronizing signal generating portion 40, but the synchronizing signal generating device is not limited thereto.

In the communications system 100, the wire communications devices in the base station send out the respective spread spectrum modulated signals and synchronizing signal to the wire communications channel 82. Accordingly, the wire communications devices in the terminal units receive this synchronizing signal from the wire communications channel, and can send out the respective spread spectrum modulated signals. In other words, synchronizing signals are always provided to the base station and terminal units. Accordingly, both the base station and terminal units can produce spread spectrum codes using the synchronizing signal. Consequently, synchronization can be established between the base station and the terminal units without obtaining synchronization acquisition.

As described above, although spread spectrum systems are used in the wire communications devices described in the embodiments, no time is required for synchronization acquisition. Therefore, the transmitter and receiver can communicate with each other at a high speed and can communicate with each other via fully duplex or half-duplex bi-directional channel by high-speed spread spectrum communications system.

The above description on wire communications devices, wire communications apparatus and a wire communications method is merely an example. The present invention is not limited to the abovementioned embodiments. For example, the wire communications devices may be capable of producing a spread spectrum code selected from a set of spread spectrum codes.

### INDUSTRIAL APPLICABILITY

As described above in detail, in the wire communications device and wire communications apparatus of the present invention, a synchronizing signal can be sent to the wire communications channel in addition to a spread spectrum modulated signal produced using a spread spectrum code in synchronization with the synchronizing signal. Accordingly, a spread spectrum code for reverse spread spectrum demodulation can be produced with respect to the synchronizing signal received from the wire communications channel, thereby to eliminate conventional synchronization acquisition.

In the wire communications method of the present invention, the synchronizing signal from the wire communications channel can be utilized as a timing signal for producing the spread spectrum code used for reverse spread spectrum demodulation of the spread spectrum modulated signal. Accordingly, spread spectrum codes for spread spectrum modulation and reverse spread spectrum demodulation can be generated with respect to the synchronizing signal. Since the spread spectrum code can perform reverse spread spectrum demodulation of signals from the wire communications channel and spread spectrum modulation of the transmission data without conventional synchronization acquisition.

Therefore, a wire communications device, wire communications apparatus, wire communications system and wire communications method can be provided to increase the transmission speed of data using spread spectrum communications systems applied to wire communications channels.

## Claims

1. A wire communications device comprising:
a primary modulating portion performing primary modulation of transmission data to produce a primary modulated signal;
a code generating portion producing a spread spectrum code in synchronization with a synchronizing signal having a predetermined period;
a spread spectrum modulating portion performing spread spectrum modulation of said primary modulated signal using said spread spectrum code to produce a spread spectrum modulated signal; and
a communications interface portion providing a wire communications channel with both said synchronizing signal and said spread spectrum modulated signal.

2. The wire communications device according to claim 1, further comprising:
a reverse spread spectrum demodulating portion performing reverse spread spectrum modulation of a signal from said wire communications channel using said spread spectrum code to produce a reverse spread spectrum modulated signal; and
a primary demodulating portion performing primary demodulation of said reverse spread spectrum demodulated signal to produce reception data.

3. The wire communications device according to claim 1 or 2, further comprising a signal generating portion for generating said synchronizing signal.

4. The wire communications device according to claim 1 or 2, further comprising:
means for generating a reference signal; and
filtering means, connected to said generating means, for filtering said reference signal to produce said synchronizing signal.

5. The wire communications device according to claim 4, wherein said filtering means is provided to produce a signal including a component of a frequency corresponding to a fundamental period of said reference signal.

6. The wire communications device according to any one of claims 1 to 5, wherein said synchronizing signal is produced to be substantially expressed by one wave of a single sine wave and a single cosine wave.

7. The wire communications device according to any one of claims 1 to 5, further comprising pulse generating means, connected to said code generating portion, for producing pulse signals at each reference period of said reference signal.

8. The wire communications device according to any one of claims 1 to 5, further comprising pulse generating means, provided between said filtering means and said code generating portion, for producing pulse signals at each reference period of said reference signal.

9. The wire communications device according to any of claims 1 to 5, wherein said primary modulating portion is coupled to said pulse generating means, and operates to receive said transmission signal using the pulse signals from said pulse generating means.

10. The wire communications device according to any one of claims 1 to 5, wherein said communications interface portion is connected to said wire communications channel, and includes means for transmitting said synchronizing signal regardless of the presence or absence of said spread spectrum modulated signal.

11. The wire communications device according to claim 1 or 2, wherein said communications interface portion further comprises extraction means, connected to said wire communications channel, for extracting a signal component of said synchronizing signal from a signal received from said wire communications channel.

12. The wire communications device according to claim 1 or 2, further comprising a signal reproducing portion reproducing a synchronizing signal from a reception signal including a signal component having said predetermined period.

13. The wire communications device according to claim 1 or 2, wherein said communications interface portion includes extracting means, connected to said wire communications channel, for extracting a synchronizing signal component from a signal received from said wire communications channel, and;
wherein said wire communications device further comprises pulse generating means, connected to said extracting means, for producing pulse signals at each fundamental period from a signal provided by said extracting means.

14. The wire communication device according to any of claims 1 to 13, wherein said spread spectrum code is a PN code.

15. The wire communications device according to any of claims 1 to 14, wherein the frequency spectrum of said synchronizing signal is narrower than that of said spread spectrum modulated signal.

16. A wire communications apparatus comprising:
a plurality of wire communications devices according to claim 1 or 2; and
a signal generating portion generating said synchronizing signal having said predetermined period.

17. The wire communications apparatus according to claim 16, wherein said signal generating portion further comprises means for generating a reference signal, and filtering means, connected to said generating means, for filtering said reference signal to produce a synchronizing signal.

18. A wire communications system comprising:
a wire communications apparatus according to claim 16 or 17;
a plurality of wire communications devices according to claim 1 or 2; and
a plurality of wire communications lines, each having a first end and a second end;
wherein the first end of each wire communications line is connected to one of said plurality of wire communications devices, and the second end of each wire communications line is connected to one of the plurality of wire communications devices in said wire communications apparatus.

19. The wire communications system according to claim 18, wherein some of said plurality of wire communications lines form a communications cable.

20. A method of performing wire communications between a transmitter and a receiver connected to said transmitter via a wire communications channel, said wire communications method comprising the steps of:
performing primary modulation of transmission data to produce a primary modulated signal;
providing the wire communications channel with a synchronizing signal having a predetermined period;
performing spread spectrum modulation of said primary modulated signal using a spread spectrum code synchronized with said synchronizing signal, to produce a spread spectrum modulated signal; and
providing said wire communications channel with said spread spectrum modulated signal.

21. A method of performing wire communications between a transmitter and a receiver connected to said transmitter via a wire communications channel, said wire communications method comprising the steps of:
reproducing a synchronizing signal from a signal including a signal component having a predetermined period, said signal being received from said wire communications channel;
performing reverse spread spectrum demodulation of said signal using a spread spectrum code produced in synchronization with said synchronizing signal to produce a reverse spread spectrum demodulated signal; and
performing primary demodulation of said reverse spread spectrum demodulated signal to produce reception data.
